# EUROPÄISCHE PATENTSCHRIFT

(11) **EP 1 331 290 B1**
(45) Veröffentlichungstag und Bekanntmachung des Hinweises auf die Patenterteilung: **11.10.2006**
(21) Anmeldenummer: 02026730.8
(22) Anmeldetag: 30.11.2002
(51) Int. Cl.: D01H 7/16, B23Q 3/12

(54) **Anordnung zur lösbaren Befestigung eines drehbaren Werkzeuges an einem Antriebsdorn**
Device for reversibly connecting a rotating tool to a spindle
Dispositif pour fixer de manière réversible un outil tournant à une broche

(30) Priorität: 29.01.2002 CH 1452002
(43) Veröffentlichungstag der Anmeldung: 30.07.2003
(73) Patentinhaber: Wasag-Tool AG, 5036 Oberentfelden (CH)
(72) Erfinder: Bobst, Max, 4500 Solothurn (CH)
(74) Vertreter: Morva, Tibor

(56) Entgegenhaltungen:
- EP-A- 0 517 341
- EP-A- 0 857 799
- FR-A- 2 482 892
- US-A- 5 292 082

## Beschreibung

Die vorliegende Erfindung betrifft eine Anordnung zur lösbaren Befestigung eines drehbaren Werkzeuges an einem Antriebsdorn, wobei das Werkzeug an einem am Antriebsdorn lösbar befestigbaren Trägerkörper befestigt ist.

Aus der EP-A1-1016742 ist eine Anordnung zur Befestigung eines Werkzeuges, das bei dieser Druckschrift eine zylindrische Bürste ist, an einem Antriebsdorn bekannt. Die Borsten der zylindrischen Bürste sind auf der Oberfläche eines zylindrischen Trägerkörpers angebracht. Dieser Trägerkörper wird am Antriebsdorn zwischen zwei ringförmigen, mit dem Antriebsdorn drehfest verbundenen Anschlagflächen unter Federdruck eingespannt. Die Anschlagflächen greifen an den beiden gegenüberliegenden Stirnflächen des zylindrischen Trägerkörpers an. Ein Auswechseln der Bürste bedingt die Demontage und Wiedermontage der Anschlagflächen und ist mit einem erheblichen Aufwand verbunden. Diese Anordnung ist für den Einsatz in vollautomatischen Bearbeitungsanlagen ungeeignet, weil das vollautomatische Auswechseln der abgenützten Bürsten kompliziert wäre. Ausserdem ist diese Anordnung aus verhältnismässig vielen Einzelteilen zusammengestzt, wodurch wirtschaftliche Nachteile erwachsen.

Eine andere Anordnung zur Befestigung eines Werkzeuges ist aus EP 0 857 799 A1 bekannt.

Ausserdem sind spreizbare Spanndorne zur Befestigung eines Trägerkörpers an einem Antriebsdorn allgemein bekannt. Diese Spanndorne sind wirtschaftlich nachteilig und verursachen in vollautomatischen Bearbeitungsanlagen einen hohen Aufwand.

Die Aufgabe der Erfindung ist es, eine Anordnung zur lösbaren Befestigung eines drehbaren Werkzeuges an einem Antriebsdorn der eingangs erwähnten Art vorzuschlageen, die eine einfache Befestigung des Trägerkörpers des Werzeuges am Antriebsdorn ermöglicht, für den Einsatz in vollautomatischen Bearbeitungsanlagen geeignet und wirtschaftlich vorteilhaft ist.

Die gestellte Aufgabe ist dadurch gelöst, dass der Trägerkörper aus einem verhältnismässig weichem Werkstoff besteht und eine zentrale im wesetlichen zylindrische Einführöffnung mit mindestens drei am Umfang symmetrisch verteilten, radial nach innen vorstehenden exzentrischen Segmenten aufweist, deren Radien in Drehrichtung des Trägergkörpers vom grössten zylindrischen Durchmesser der Einführöffnung bis zum Ende des Segmentes stetig abnehmen und dass der aus einem verhältnismässig härterem Werkstoff bestehende Antriebsdorn an seinem für die Einführung in die zentrale Einführöffnung des Trägerkörpers vorgesehenen Eintauchbereich mindestens drei am Umfang symmetrisch verteilte, radial nach aussen vorstehende Längsrippen aufweist, wobei die Längsrippen an ihren zylindrischen Oberflächen mit Gewindeschneidsegmenten versehen sind, die bei der Befestigung des festgehaltenen Trägerkörpers am eine Drehbewegung ausführenden Antriebsdorn in die exzentrischen Segmente des Trägerkörpers teilweise Gewinde schneiden um eine axiale und drehfeste Verbindung zwischen dem Trägerkörper und dem Antriebsdorn herzustellen. Dadurch, dass der verhältnismässig weiche Trägerkörper in seiner zentralen Einführöffnung drei radial vorstehende Segmente mit in Drehrichtung des Trägerkörpers abnehmenden Radien aufweist, ist es möglich mit den zylindrischen Gewindeschneidsegmenten des Antriebsdorns beim festgehaltenen oder zumindest gebremsten Trägerkörper in diesen Gewinde zu schneiden und so die Verbindung zwischen dem Trägerkörper und dem Antriebsdorn in Drehrichtung und in Axialrichtung herzustellen. Diese Verbindung kann in einer vollautomatischen Bearbeitungsanlage durch festhalten des Trägerkörpers und Umkehr der Drehrichtung des Anteriebsdorns gelöst werden. Das Anschliessen eines neuen Ersatzwerkzeuges mit einem neuen Trägerkörper erfolgt durch das Gewindeschneiden mit Hilfe des Anteriebsdorns im festgehaltenen oder gebremsten neuen Trägerkörper des Ersatzwerkzeuges in einem Arbeitsgang.

Die in Drehrichtung des Antriebsdorns vorne liegenden, zum Gewindeschneiden in den in der zentralen Einführöffnung vorhandenen exzentrischen Segmenten bestimmten Kanten der Gewindeschneidsegmente sind vorteilhafterweise scharfkantig ausgebildet. Um das Gewindeschneiden im Trägerkörper zu erleichtern, sind die in Drehrichtung des Antriebsdorns vorne liegenden Kanten der Gewindeschneidsegmente scharfkantig ausgebildet.

Die der Drehrichtung des Antriebsdorns abgekehrten Kanten der Gewindeschneidsegmete können zur Erleichterung des Lösens des Antribsdorns aus der zentralen Einführöffnung des Trägerkörpers durch Umkehr der Drehrichtung des Antriebsdorns in der zentralen Einführöffnung abgerundet sein. Um das Lösen der Verbindung zwischen dem Anteriebsdorn und dem festgehaltenen Trägerkörper durch Umkehr der Drehrichtung des Antriebsdornes zu erleichtern, sind die der Drehrichtung des Antriebsdorns abgekehrt liegenden Kanten der Gewindeschneidsegmente abgerundet.

Das Gewinde der Gewindeschneidsegemente ist mit Vorteil ein spitziges Dreieckgewinde. Um den Widerstand beim Gewindeschneiden im Trägerkörper des Werkzeuges herabzusetzen, sind die am Antriebsdorn ausgebildeten Gewindeschneidsegmente in Form eines spitzigen Dreieckgewindes ausgebildet.

Im folgenden wird ein Ausführungsbeispiel der Erfindung anhand der beiliegenden Zeichnungen näher beschrieben. Es zeigen:
- Fig.1: die Frontansicht eines Trägerkörpers ohne Werkzeug und
- Fig.2: die Seitenansicht dieses Trägerkörpers,
- Fig.3: die Seitenansicht und
- Fig.4: die Draufsicht eines Anteriebsdorns,
- Fig.5: die perspektivische Darstellung eines Antriebsdorns,
- Fig.6: den Querschnitt über einen Teil des Gewindeprofils der Gewindeschneidsegmente am Antriebsdorn.

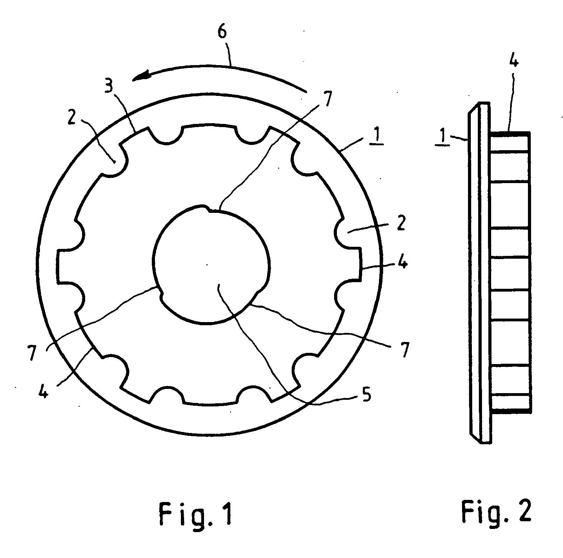

In Fig.1 ist die Frontansicht eines Trägerkörpers 1 dargestellt. Dieser Trägerkörper 1 ist für die Aufnahme eines nicht dargestelleten drehbaren Werkzeuges vorgesehen. Das Werkzeug kann beispielsweise eine Rundbürste sein, die in einer vollautomatischen Bearbeitungsanlage benützt werden kann. Fig.2 zeigt diesen Trägerkörper 1 in der Seitenansicht. In dieser Figur erkennt man die mit in Fig.1 gut sichtbaren Einbuchtungen 2 und mit Rippen 3 versehene zylindrische Aufnahmefläche 4 für das nicht gezeigte Werkzeug.

Der Trägerkörper 1 ist aus einem verhältnismässig weichen Werkstoff, wie Kunststoff oder Aluminium hergestellt. In der Mitte des Trägerkörpers 1 befindet sich eine im wesentlichen zylindrische Einführöffnung 5. Die Drehrichtung des mit einem Werkzeug ausrüstbaren Trägerkörpers 1 ist mit dem in Gegenuhrzeigersinn zeigenden Pfeil 6 angedeutet. Am Umfang der Einführöffnung 5 sind drei am Umfang symmetrisch verteilte exzentrische Segmente 7 angeordnet. Die Radien dieser Segmente 7 nehmen in Drehrichtung 6 des Trägerkörpers 1 vom grössten zylindrischen Durchmesser der Einführöffnung 5 bis zum Ende des vorstehenden Segmentes 7 stetig ab. Am Ende der vorstehenden Segmente 7 steigt der Radius der Einführöffnung 5 sprunghaft auf den Wert des grössten zylindrischen Durchmessers der Einführöffnung 5 an. Die Herstellung dieses Trägerkörpers 1 aus einem verhältnismässig weichem Material, aus Kunststoff oder aus einem weichen Metall, wie Aluminium ist kostengünstig möglich. Die Befestigung eines drehbaren Werkzeuges an diesem Trägerkörper 1 gehört zum Rüstezeug des einschlägigen Fachmannes.

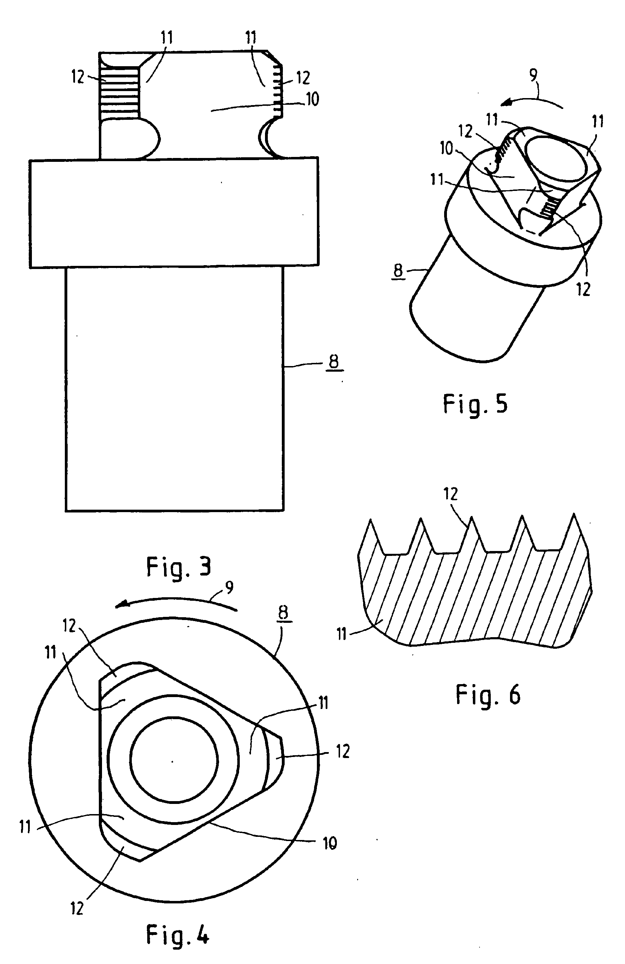

Fig.3 zeigt die Seitenansicht und Fig.4 die Draufsicht eines Antriebsdorns 8. Dieser Antriebsdorn 8 ist in Fig.5 auch noch perspektivisch dargestellt. Der in Fig.3 untere Bereich des Antriebdorns 8 wird in einer allgemein bekannten, nicht dargestellten Antriebsanordnung eingespannt und damit betriebsmässig in Gegenuhrzeigersinn gemäss Pfeil 9 in Fig.4 angetrieben.

Der Antriebsdorn 8 ist aus einem verhältnismässig hartem Werkstoff, in der Regel aus Stahl hergestellt.

Der vordere, für die Einführung in die zentrale Einführöffnung 5 des Trägerkörpers 1 vorgesehene Eintauchbereich 10 des Antriebsdorns 8 weist einen dem grössten Durchmesser der zylindrischen Einführöffnung 5 entsprechenden Aussenradius auf. An diesem Eintauchbereich 10 sind drei am Umfang symmetrisch verteilte, radial vorstehende Längsrippen 11 angeformt. Die zylindrischen Oberflächen der Längsrippen 11 sind mit Gewindeschneidsegmenten 12 versehen. Fig.6 zeigt den Querschnitt eines Teils der Gewindeschneidsegmente 12. Aus dieser Figur ist klar erkennbar, dass das Gewinde der Gewindeschneidsegmente 12 ein spitzwinkliges Dreieckgewinde ist, das das Gewindeschneiden günstig beeinflusst.

Um den Trägerkörper 1 am Antriebsdorn 8 zu befestigen, wird der Trägerkörper 1 festgehalten oder zumindest gebremst. Der Eintauchbereich 10 des Antriebsdorns 8 wird in die zentrale Einführöffnung 5 des Trägerkörpers 1 eingeführt. Diese Einführung ist möglich, weil der grösste zylindrische Durchmesser der Einführöffnung 5 des Trägerkörpers 1 für die Aufnahme der drei mit Gewindeschneidsegmenten 12 versehenen Längsrippen 11 des Antriebsdorns 8 geeignet ist. Sobald die Einführung des Eintauchbereiches 10 des Antriebsdorns 8 in die Einführöffnung 5 des Trägerkörpers 1 abgeschlossen ist, wird der Antriebsdorn 8 bei festgehaltenen oder zumindest gebremsten Trägerkörper 1 in in der Fig.4 angedeuteten Richtung 9 in Drehbewegung versetzt. Bei dieser Drehbewegung erreichen die Gewindeschneidsegmente 12 die in der Einführöffnung 5 vorstehenden Segmente 7 mit den abnehmenden Radien. Bei Fortsetzung der Drehbewegung des Antriebsdorns 8 erfolgt ein Gewindeschneiden in den verhältnismässig weichen Segmenten 7 im Trägerkörper 1. Das Gewindeschneiden wird vor dem Erreichen des Endes der Segmente 7 abgebrochen, der Trägerkörper 1 freigegeben und das am jetzt ungebremsten Trägerkörper 1 befestigte Werkzeug für die Benützung in einer Bearbeitungsanlage freigegeben. Das weitere Gewindeschneiden würde ein über dem Drehmomentbedarf der Bearbeitung liegendes Drehmoment erfordern, so dass der Trägerkörper 1 auf dem Antriebsdorn 8 während der Bearbeitung in Drehrichtung sicher befestigt bleibt.

Das Lösen des Trägerkörpers 1 vom Antriebsdorn 8 erfolgt indem die Drehrichtung des Antriebsdorns 8 bei festgehaltenen oder gebremsten Trägerkörper 1 umgekehrt wird. Um diese Bewegung zu begünstigen, sind die der Drehrichtung gemäss Pfeil 9 abgekehrten Kanten der Gewindeschneidsegmente 12 abgerundet. Nach Verlassen der Gewindeschneidsegmente 12 aus dem im Trägerkörper 1 geschnittenen Gewinde kann der Antriebsdorn 8 aus der Einführöffnung 5 des Trägerkörpers 1 ausgefahren werden. Danach kann der frei gewordene Eintauchbereich 10 des Antriebsdorns 8 in die Einführöffnung 5 eines anderen, ein neues Werkzeug tragenden Trägerkörpers 1 für die Fortsetzung des Bearbeitungsvorganges eingeführt und darin durch die neu geschnittenen Gewindesegmente befestigt werden.

## Patentansprüche

1. Anordnung zur lösbaren Befestigung eines drehbaren Werkzeuges an einem Antriebsdorn (8), wobei das Werkzeug an einem am Antriebsdorn (8) lösbar befestigbaren Trägerkörper (1) befestigt ist, **dadurch gekennzeichnet, dass** der Trägerkörper (1) aus einem verhältnismässig weicherem Werkstoff als der Antriebsdorn besteht und eine zentrale im wesetlichen zylindrische Einführöffnung (5) mit mindestens drei am Umfang symmetrisch verteilten, radial nach innen vorstehenden, exzentrischen Segmenten (7) aufweist, deren Radien in Drehrichtung (6) des Trägerkörpers (1) vom grössten zylindrischen Durchmesser der Einführöffnung (5) bis zum Ende des Segmentes (7) stetig abnehmen und dass der aus einem verhältnismässig härterem Werkstoff bestehende Antriebsdorn (8) an seinem für die Einführung in die zentrale Einführöffnung (5) des Trägerkörpers (1) vorgesehenen Eintauchbereich (10) mindestens drei am Umfang symmetrisch verteilte radial nach aussen vorstehende Längsrippen (11) aufweist, wobei die Längsrippen (11) an ihren zylindrischen Oberflächen mit Gewindeschneidsegmenten (12) versehen sind, die bei der Befestigung des festgehaltenen Trägerkörpers (1) am eine Drehbewegung ausführenden Antriebsdorn (8) in die exzentrischen Segmente (7) des Trägerkörpers (1) teilweise Gewinde schneiden um eine axiale und drehfeste Verbindung zwischen dem Trägerkörper (1) und dem Antriebsdorn (8) herzustellen.

2. Anordnung nach Anspruch 1, **dadurch gekennzeichnet, dass** die in Drehrichtung (9) des Antriebsdorns (8) vorne liegenden, zum Gewindeschneiden in den in der zentralen Einführöffnung (5) vorhandenen exzentrischen Segmenten (7) bestimmten Kanten der Gewindeschneidsegmente (12) scharfkantig ausgebildet sind.

3. Anordnung nach einem der Ansprüche 1 bis 2, **dadurch gekennzeichnet, dass** die der Drehrichtung (9) des Antriebsdorns (8) abgekehrten Kanten der Gewindeschneidsegmete (12) zur Erleichterung des Lösens des Antribsdorns (8) aus der zentralen Einführöffnung (5) des Trägerkörpers (1) durch Umkehr der Drehrichtung des Antriebsdorns (8) in der zentralen Einführöffnung (5) abgerundet sind.

4. Anordnung nach einem der Ansprüche 1 bis 3, **dadurch gekennzeichnet, dass** das Gewinde der Gewindeschneidsegemente (12) ein spitzwinkliges Dreieckgewinde ist.

## Claims

1. An arrangement for the releasable attachment of a rotatable tool to a drive spindle (8), wherein the tool is fixed to a carrier body (1) which is adapted to be attached to the drive spindle (8) in releasable manner, **characterized in that** the carrier body (1) consists of a relatively softer material than the drive spindle and comprises a central, substantially cylindrical entry opening (5) with at least three radially inwardly projecting eccentric segments (7) which are distributed symmetrically around the periphery and the radii whereof constantly decrease in the direction of rotation (6) of the carrier body (1) from the largest cylindrical diameter of the entry opening (5) up to the end of the segment (7), and **in that** the drive spindle (8) consisting of a relatively harder material comprises at least three radially outwardly projecting longitudinal ribs (11) that are distributed symmetrically around the periphery at the entry portion of said spindle that is provided for insertion into the central entry opening (5) of the carrier body (1), wherein the cylindrical surfaces of the longitudinal ribs (11) are provided with thread-cutting segments (12) which cut partial threads into the eccentric segments (7) of the carrier body (1) in the course of the attachment of the stationary carrier body (1) to a drive spindle (8) implementing a rotary movement in order to produce an axial and mutually non-rotatable connection between the carrier body (1) and the drive spindle (8).

2. An arrangement in accordance with Claim 1, **characterized in that** the edges of the thread-cutting segments (12) lying to the fore in the direction of rotation (9) of the drive spindle (8) and intended for cutting the thread in the eccentric segments (7) present in the central entry opening (5) are formed with sharp edges.

3. An arrangement in accordance with any of the Claims 1 to 2, **characterized in that** the edges of the thread-cutting segments (12) facing away from the direction of rotation (9) of the drive spindle (8) are rounded off for facilitating the release of the drive spindle (8) from the central entry opening (5) of the carrier body (1) by reversal of the direction of rotation of the drive spindle (8) in the central entry opening (5).

4. An arrangement in accordance with any of the Claims 1 to 3, **characterized in that** the thread of the thread-cutting segments (12) is an acute angled triangular thread.

## Revendications

1. Dispositif permettant de fixer de manière réversible un outil tournant à une broche (8), l'outil étant fixé à un corps de support (1) pouvant être fixé de manière réversible à une broche (8),
**caractérisé en ce que**
le corps de support (1) se compose d'un matériau relativement plus mou que la broche et présente une ouverture d'introduction (5) centrale essentiellement cylindrique avec au moins trois segments (7) excentriques répartis symétriquement sur la circonférence et saillant radialement vers l'intérieur, dont les rayons diminuent continûment dans le sens de rotation (6) du corps de support (1), d'un plus grand diamètre cylindrique de l'ouverture d'introduction (5) vers une extrémité du segment (7), et la broche (8) en un matériau relativement plus dur, présente, dans la zone d'enfoncement (10) pour l'introduction du corps de support (1) dans l'ouverture d'introduction (5) centrale, au moins trois nervures longitudinales (11) réparties symétriquement sur la circonférence et faisant saillie radialement vers l'extérieur, les surfaces cylindriques des nervures longitudinales (11) étant munies de segments de taraudage (12) qui, le corps de support (1) en retenue sur la broche (8) effectuant une rotation, pratiquent un taraudage partiel dans les segments (7) excentriques du corps de support (1) afin de produire un raccord axial fixe entre le corps de support (1) et la broche (8).

2. Dispositif selon la revendication 1,
**caractérisé en ce que**
les arêtes des segments de taraudage (12) allant dans le sens de rotation (9) de la broche (8) ont des arêtes vives pour le taraudage dans les segments excentriques (7) présents dans l'ouverture d'introduction (5) centrale.

3. Dispositif selon l'une des revendications 1 et 2,
**caractérisé en ce que**
les arêtes des segments de taraudage (12) à l'inverse du sens de rotation (9) de la broche (8) sont arrondies afin de faciliter le dégagement de la broche (8) hors de l'ouverture d'introduction (5) centrale du corps de support (1) ce dégagement s'effectuant par inversion du sens de rotation de la broche (8) dans l'ouverture d'introduction (5) centrale.

4. Dispositif selon l'une des revendications 1 à 3,
**caractérisé en ce que**
le filetage des segments de taraudage (12) est un filetage triangulaire à angle aigu.
